# EUROPÄISCHE PATENTSCHRIFT

(11) **EP 1 482 210 B1**
(45) Veröffentlichungstag und Bekanntmachung des Hinweises auf die Patenterteilung: **18.04.2007**
(21) Anmeldenummer: 04010413.5
(22) Anmeldetag: 03.05.2004
(51) Int. Cl.: F16H 37/08

(54) **Getriebe für den Antrieb eines Drehrohres**
Transmission to drive a rotating tube
Transmission pour l'entraînement d'un tube rotatif

(30) Priorität: 27.05.2003 DE 10324362
(43) Veröffentlichungstag der Anmeldung: 01.12.2004
(73) Patentinhaber: A. FRIEDR. FLENDER AG, 46395 Bocholt (DE)
(72) Erfinder: Uebbing, Dietmar, 46395 Bocholt (DE)
(74) Vertreter: Radünz, Ingo

(56) Entgegenhaltungen:
- WO-A-20/04067998
- DE-A1- 19 963 597
- DE-B- 1 206 254
- PATENT ABSTRACTS OF JAPAN Bd. 005, Nr. 112 (M-079), 21. Juli 1981 (1981-07-21) -& JP 56 052649 A (TOYO SEIMITSU ZOKI KK), 11. Mai 1981 (1981-05-11)
- PATENT ABSTRACTS OF JAPAN Bd. 017, Nr. 701 (M-1533), 21. Dezember 1993 (1993-12-21) & JP 05 240315 A (ORIENTAL MOTOR CO LTD), 17. September 1993 (1993-09-17)

## Beschreibung

Die Erfindung betrifft ein Getriebe für den Antrieb eines Drehrohres mit den Merkmalen des Oberbegriffs des Anspruches 1.

Antriebslösungen für Drehrohre, wie Rohrmühlen oder Drehrohröfen sind entlang des Triebstrangs durch den charakteristischen Aufbau beginnend mit einem Motor, einer Kupplung, einem untersetzenden Zahnradgetriebe und der angekoppelten Rohrmühle gekennzeichnet. Das Getriebe wandelt sowohl das Drehmoment der meist als Elektromotor ausgebildeten Antriebsquelle um und passt zusätzlich die gewünschte und oftmals vom Mahlgut der Rohrmühle bestimmende Abtriebsdrehzahl über das erforderliche Übersetzungsverhältnis an.

Aus der DE 27 23 319 A1 ist ein zweistufiges Mehrweg-Stirnradgetriebe bekannt, bei dem mittels innerer Leistungsaufteilung ein Zentralantrieb für Rohrmühlen, Brecher und dergleichen Drehrohre geschaffen wird. Die Leistungsaufteilung ermöglicht eine Erhöhung der übertragbaren Leistung bei geringem Raumbedarf. Die Leistungsübertragung erfolgt ausschließlich über gehärtete Außenverzahnungen. Das motorseitige Antriebsritzel und die Zwischenwellen sind mehrfach gelagert, womit ein erhöhter Fertigungs- und Montageaufwand verbunden ist. Die Vielzahl von notwendigen Einzelmaßnahmen zum Ausgleich der fertigungs- und verzahnungsbedingten Fehler kennzeichnet diesen Zentralantrieb.

In der DE 34 18 543 C1 ist ein Zweiweggetriebe mit Leistungsaufteilung beschrieben, bei dem die Leistungsaufteilung mittels einer axial frei einstellbaren Welle erfolgt, auf der entgegengesetzt schrägverzahnte Ritzel angebracht sind. Die Summierung der Leistung erfolgt unter Zwischenschaltung weiterer Zwischenstufen an einem außenverzahnten Stirnrad. Für den Einsatz der Getriebe dieser Gattung ist die obere Grenze der übertragbaren Leistungen bei etwa 3.000 kW erreicht. Höhere Leistungen können nur mit einer Vergrößerung des Durchmessers der Abtriebsstufe erzielt werden. Bei dieser grundsätzlich in Betracht zu ziehenden Möglichkeit ist nicht berücksichtigt, dass fertigungstechnische Restriktionen und damit wirtschaftliche Argumente dieser Lösung entgegenstehen.

Ein alternatives, auf dem Prinzip Leistungsverzweigung aufbauendes Konzept zum Antrieb von Rohrmühlen ist in der DE 35 34 940 C2 beschrieben. Hier ist die Antriebsstufe ein Planetengetriebe und die Abtriebsstufe ein Stirnradgetriebe. Eine an der Rohrmühle angebrachte Außenverzahnung ersetzt das Zahnrad der Abtriebsstufe des aus DE 34 18 543 C1 bekannten Zweiweggetriebes. Aufgrund der konzeptbedingten Öffnung des Gehäuses ist, hier verursacht durch die rauen Umwelteinflüsse und des damit einhergehenden Verschleißes der Antriebskomponenten, ein erhöhter Wartungs- und Instandhaltungsbedarf erforderlich.

Aus der DE 28 41 330 B2 ist ein Planetengetriebe mit einer Leistungsverzweigung auf zwei Planetensätze mit einem gemeinsamen Planetenträger bekannt. Das Planetengetriebe summiert am Abtrieb die zuvor aufgeteilten Leistungsflüsse. Die koaxial geführten Sonnenwellen stützen sich an definierten Stellen über Wälzlager im Getriebegehäuse ab. Die anderen Glieder der Antriebskette, Hohlräder, Planetenräder und Planetenträger, sind ebenfalls definiert gelagert bzw. gehäusefest montiert. Eine Relativdrehung der Sonnenwellen zueinander ist nicht vorgesehen. Aufgrund dieser Wellenführung müssen zum Ausgleich von radialen und tordierenden Störgrößen baulich gesonderte Maßnahmen zum Ausgleich dieser Belastungen eingesetzt werden. Der Verdrehlastausgleich erfolgt mittels einer eingangsseitigen leistungsaufteilenden Kupplung.

Für Anwendungsfälle im oberen Leitungsbereich werden Planetengetriebe eingesetzt, bei denen mehrere Planetenstufen hintereinander geschaltet sind. Auch hier ist zu beachten, dass die äußeren Abmaße mit einer Erhöhung der zu übertragenden Leistung erheblich ansteigen. Der Forderung zur Herstellung einer bestimmten vorgegebenen Übersetzung aus dem Anwendungsprozess kann durch den Einsatz symmetrischer Koppelgetriebe entgegengewirkt werden.

Der Erfindung liegt die Aufgabe zugrunde, das gattungsgemäße Getriebe derart zu gestalten, dass die Forderungen nach einem wartungsarmen, kompakt bauenden Zentralantrieb für Drehrohre, wie Rohrmühlen oder Drehrohröfen, und nach der jeweils individuell erforderlichen Übersetzung durch einen einfachen konstruktiven Aufbau mit dazu angepaßten Komponenten vorzugsweise für den oberen Leistungsbereich von mehr als 3.000 KW erfüllt werden.

Aus der DE 12 06 254 B ist ein Getriebe mit Merkmalen des Oberbegriffs des Anspruches 1 bekannt. In das Getriebe fließt von mindestens einer Antriebsmaschine die Antriebsleistung direkt auf mindestens eine leistungsteilende Ritzelwelle. Die leistungssummierende Planetenstufe erhält über je eine einfache Zahnkupplung je Antriebsstrang und der elastischen Lagerung zwischen den in einem Topf angebrachten Hohlrädern und dem feststehenden Getriebegehäuse die kinematisch erforderliche Einstellbeweglichkeit der Getriebeglieder. Die Planetenräder der beiden die leistungssummierende Planetenstufe bildenden Planetengetriebe sind auf gemeinsamen Planetenwellen angeordnet.

Die Aufgabe wird bei einem gattungsgemäßen Getriebe erfindungsgemäß durch die kennzeichnenden Merkmale des Anspruches 1 gelöst. Vorteilhafte Ausgestaltungen der Erfindung sind Gegenstand der Unteransprüche.

Das erfindungsgemäße Getriebe zeichnet sich durch die Verwendung eines eingangsseitigen leistungsaufteilenden mehrstufigen Stirnradgetriebes und eines abtriebseitigen Planetengetriebes zur Leistungssummierung aus, das aus zwei parallelgeschalteten Planetenstufen besteht. Das Getriebe ist in einem sehr kompakt bauenden, mehrteiligen geschlossenen Getriebegehäuse untergebracht. Die Planetenstufen leiten die mechanische Leistung über einen gemeinsamen einstückigen Planetenträger in die Arbeitsmaschine. Die vorteilhafte Gestaltung des Planetenträgers führt auch bei hohen zu übertragenden Leistungen zu einer kompakten und festigkeitsgerechten Konstruktion, deren Fertigung durch ur- oder umformende Verfahren und der abschließenden Zerspanung mit einfach darstellbaren Fertigungstoleranzen auf einem hohen Qualitätsniveau gewährleistet ist.

Die Erfindung und die mit der Erfindung verbundenen Vorteile werden nachfolgend an einem in der Zeichnung dargestellten Ausführungsbeispiel näher erläutert. Es zeigen:
- Fig. 1: den Längsschnitt durch ein Getriebe,
- Fig. 2: einen Planetenträger für das Getriebe nach Fig. 1 in perspektivischer Darstellung und
- Fig. 3: einen anderen Planetenträger für das Getriebe nach Fig. 1 in perspektivischer Darstellung.

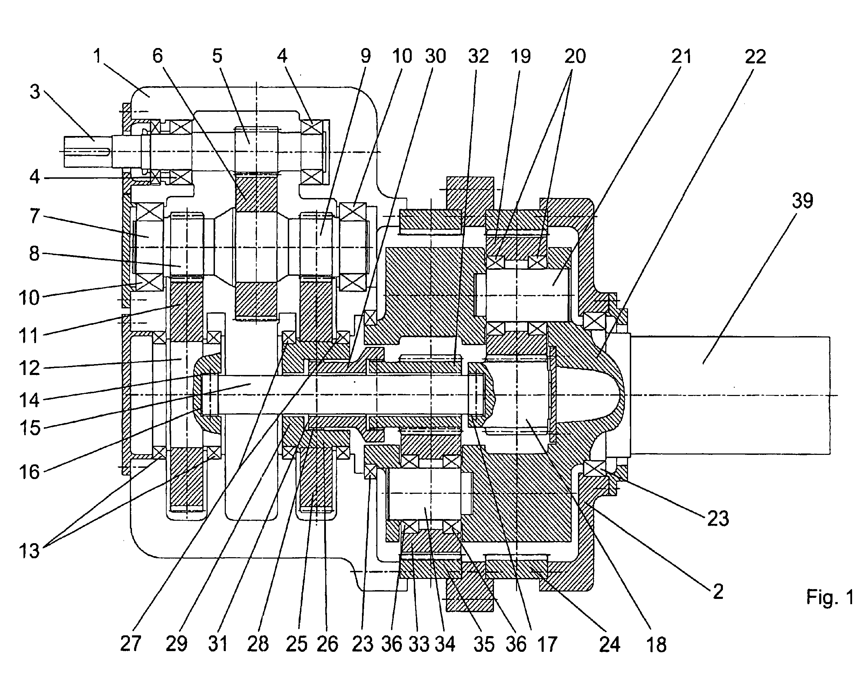

Das in Fig. 1 dargestellte Getriebe dient dem Antrieb einer Rohrmühle mit einem geradlinigen Fluss der Antriebsleistung in die Zentralachse der Rohrmühle. Das Getriebe besteht aus einer eingangsseitigen Leistungsaufteilungsstufe und einer abtriebsseitigen Leistungssummierungsstufe. Das Getriebe ist in einem Gehäuse untergebracht, das aus zwei im Inneren räumlich getrennten Gehäuseteilen 1, 2 besteht. Das Gehäuseteil 1 weist eine horizontale Teilfuge auf und nimmt die eingangsseitige Leistungsaufteilungsstufe auf. Das andere Gehäuseteil 2 nimmt die abtriebsseitge Leistungssummierungsstufe auf. Die räumliche Trennung erlaubt den Einsatz unterschiedlicher Konzepte zur Ölversorgung der Teilgetriebe. Vorzugsweise lassen sich die schnell laufenden Teile der leistungsaufteilenden Stufe in dem Gehäuseteil 1 mit einer hier nicht dargestellten Druckumlaufschmierung versorgen. Für die Leistungssummierungsstufe, die - wie nachfolgend ausführlich erläutert wird - als Planetenstufe ausgebildet ist, reicht in dem Gehäuseteil 2 im Regelfall eine einfache Tauchschmierung aus. Die Ölmenge in dem die Planetenstufe aufnehmenden Gehäuseteil 2 kann über den Kreislauf der Druckumlaufschmierung in dem die Leistungsaufteilungsstufe aufnehmenden Gehäuseteil 1 geregelt werden. Das Gehäuseteil 1 dient gleichzeitig dem Gehäuseteil 2 als Drehmomentenstütze.

Die Antriebsleistung wird von einem angekuppelten Elektromotor, der hier nicht dargestellt ist, in die Antriebswelle 3 eingeleitet. Die Antriebswelle 3 stützt sich in dem Gehäuseteil 1 über Lager 4 ab. Ein Ritzel 5 auf der Antriebswelle 3 leitet die mechanische Antriebsleistung über ein Zahnrad 6 in eine axial frei einstellbare Zwischenwelle 7 ein. Auf der Zwischenwelle 7 sind zwei entgegengesetzt schrägverzahnte Ritzel 8 und 9 angebracht. Die Schrägungswinkel sind im Fall einer geradverzahnten Übersetzungsstufe gleich groß. Ansonsten ist die Wahl des Schrägungswinkels eines der Ritzel 8, 9 von der resultierenden Axialkraft aus den anderen gleichgerichtet schrägverzahnten Übertragungsgliedern, nämlich Zahnrad 6 und ein anderes Ritzel 9, 8, abhängig. Als Konsequenz stellt sich aufgrund dieser Wahl die schwimmend gelagerte Zwischenwelle 7 selbsttätig ein.

Die Zwischenwelle 7 ist in als Loslager ausgebildeten Lagern 10 in dem Gehäuseteil 1 abgestützt. Vorzugsweise sind für die Lager 10 Wälzlager von der Bauart der Toroidal-Rollenlager einzusetzen. Für den hier vorgesehenen Einsatz des Getriebes als Zentralantrieb im oberen Leistungsbereich sind insbesondere im linearelastischen Bereich liegende Verformungen der belasteten Bauteile zu beachten. In diesem Fall ist das eine im Vergleich zu anderen leistungsaufteilenden Stufen größere - aber immer noch hinreichend kleine - Durchbiegung der Zwischenwelle 7. Gerade für diese Randbedingungen und der Forderung zu einem platzsparenden kompakten Aufbau zeichnen sich die Eigenschaften, d. h. hohe Tragkraft vergleichbarer Zylinderrollenlager und der Winkeleinstellbarkeit vergleichbarer Pendelrollenlager, der zweckmäßig gewählten Toroidal-Rollenlager aus. Die hier aufgezeigte Leistungsaufteilung erübrigt den bisherigen Aufwand bei den bekannten Zentralantrieben zum Lastausgleich über zusätzliche Kupplungselemente zwischen den Ritzeln 8, 9 an der Verzweigung.

Das Ritzel 8 leitet die Hälfte der Antriebsleistung in einen ersten Zweig, das Ritzel 9 leitet die andere Hälfte der Antriebsleistung in einen zweiten Zweig der abtriebseitigen Stufe ein. Im Unterschied zu den bisher bekannten Getrieben besteht die Abtriebseite als Leistungssummierungstufe aus einer Planetenstufe, die über zwei im Antriebsstrang parallel angeordnete Planetengetriebe gebildet wird. In den beiden Zweigen wird die mechanische Leistung über weitere Zahnräder übertragen, wobei die Zahnräder als Glieder einer Übertragungskette an der jeweils vergleichbaren Position in diesen Übertragungsketten mit den gleichen Charakteristika, wie z.B. Zähnezahl und Modul, ausgestattet sind. Bei diesen Gliedern der Übertragungsketten handelt es sich um das auf der Antriebswelle 3 sitzende Ritzel 5, die Ritzel 8, 9 der Zwischenwelle 7 sowie die später ausführlich beschriebenen Zahnräder 11, 25 und die Elemente der beiden Planetengetriebe wie die Sonnenräder 18, 32, die Planetenräder 19, 33 und die Hohlräder 24, 35. Im Besonderen ist hervorzuheben, dass einzig das hier verwirklichte Getriebe eines symmetrischen Koppelgetriebes die Wahl eines auf das Mahlgut abgestimmten Übersetzungsverhältnisses zwischen der Abtriebsdrehzahl und der eingangsseitigen Motordrehzahl durch die Variation in der Wahl der Zähnezahlen bei einem insgesamt sehr kompakten Aufbau, d. h. kleinen Außendurchmessern der Planetenstufe, gestattet.

In dem ersten Zweig des Getriebes kämmt ein Zahnrad 11 mit dem Ritzel 8 auf der Zwischenwelle 7. Das Zahnrad 11 sitzt auf einer Welle 12, deren Achse gleichzeitig auf der Zentralachse der Rohrmühle liegt. Die Welle 12 stützt sich über Lager 13 in dem Gehäuseteil 1 ab. In einer zylindrischen Eindrehung in die abtriebseitige Stirnfläche der Welle 12 ist eine innere Kupplungsverzahnung 14 eingebracht. In diese Kupplungsverzahnung 14 greift eine an beiden Enden außenverzahnte Kupplungswelle 15 ein. Zur Axialspielbegrenzung können an dieser Kupplungswelle 15 stirnseitig axiale Gleitelemente 16 zur hilfsweisen axialen Abstützung angebracht sein. Das gegenüberliegende Ende der Kupplungswelle 15 endet in einer innenverzahnten Kupplungshälfte 17 des Sonnenrads 18 des ersten Planetengetriebes.

Das Sonnenrad 18 des ersten Planetengetriebes steht mit Planentenrädern 19 in Eingriff, die auf Planetenachsen 21 sitzen. Die Anbindung über die doppelgelenkige Zahnkupplung ermöglicht es dem nicht weiter gefesselten Sonnenrad 18, sich zum selbsttätigen Lastausgleich als Folge von fehlerbehafteten Zahnkräften frei zwischen einer Mehrzahl von Planetenrädern 19 einzustellen. Von den Planetenachsen 21 der Planetenräder 19 wird ein gleichschenkliges Polygon aufgespannt. Die Planetenräder 19 des ersten Planetengetriebes stützen sich über Lager 20 auf den Planetenachsen 21 in einem Planetenträger 22 ab. Der Planetenträger 22 ist in Lagern 23 in dem Gehäuseteil 2 gelagert. Die Planetenräder 19 wiederum wälzen in einem gehäusefesten Hohlrad 24 ab.

In dem zweiten Zweig des Getriebes kämmt ein Zahnrad 25 mit dem Ritzel 9 der Zwischenwelle 7. Das Zahnrad 25 sitzt auf einer Hohlwelle 26, deren Achse wiederum auf der Zentralachse der Rohrmühle liegt. Die Hohlwelle 26 stützt sich über Lager 27 in dem Gehäuseteil 1 ab. Eine zylindrische Öffnung der Hohlwelle 26 umgibt zudem konzentrisch die Kupplungswelle 15. Auf der inneren Mantelfläche der Hohlwelle 26 ist eine weitere innere Kupplungsverzahnung 28 einer zweiten doppelgelenkigen Zahnkupplung angebracht. Vorteilhafterweise ist diese Kupplungsverzahnung 28 symmetrisch zur Verzahnung des Zahnrades 25 angebracht. Damit lassen sich auf einfache Weise mögliche Kippmomente ausschalten. Die Hohlwelle 26 und die Lager 27, die die Wand zwischen den Gehäuseteilen 1, 2 durchdringen, fungieren gleichzeitig als Trennelemente zwischen den Innenräumen der Gehäuseteile 1, 2. Beispielsweise verengt ein ringförmiger Absatz 29 an der zur Welle 12 weisenden Stirnseite der Hohlwelle 26 die zylindrische Bohrung soweit, dass möglichst wenig Schmieröl aus dem Bereich der Tauchschmierung in dem Gehäuseteil 2 in den Bereich der Druckumlaufschmierung in dem Gehäuseteil 1 gelangen kann. Da sich dieser Ölübergang nicht gänzlich unterbinden lässt, kann über eine hier nicht dargestellte Ölstandsüberwachung die Ölmenge in dem Gehäuseteil 2 über den Kreislauf der Druckumlaufschmierung geregelt werden.

In die innere Kupplungsverzahnung 28 greift eine ebenfalls als Hohlwelle ausgebildete Kupplungswelle 30 ein. Stirnseitig besteht ebenfalls die Möglichkeit, axiale Gleitelemente 31 zur hilfsweisen axialen Abstützung anzubringen. Die Kupplungswelle 30 ist an jeweils einem Ende mit einer äußeren und einer inneren Kupplungsverzahnung versehen. Die abtriebseitige innere Kupplungsverzahnung umschließt die Kupplungshälfte des Sonnenrades 32 des zweiten Planetengetriebes. Die erste Kupplungswelle 15 ist durch die zweite Kupplungswelle 30 und das Sonnenrad 32 hindurchgeführt.

Das Sonnenrad 32 des zweiten Planetengetriebes steht mit Planentenrädern 33 in Eingriff, die auf Planetenachsen 34 sitzen. Analog zum ersten Zweig ermöglicht es die Anbindung über die doppelgelenkige Zahnkupplung dem Sonnenrad 32, in den umgebenden Planetenrädern 33 der zweiten Planetenstufe frei schwimmend einen Lastausgleich herbeizuführen. Die Planetenräder 33 des zweiten Planetengetriebes stützen sich über Lager 36 auf den Planetenachsen 34 in dem Planetenträger 22 ab. Die Planetenräder 33 wiederum wälzen in dem zweiten gehäusefesten Hohlrad 35 ab.

Von den Planetenachsen 34 der Planetenräder 33 wird ebenfalls ein gleichschenkliges Polygon aufgespannt. Die Polygone der Planetenachsen 21 und 34 sind zueinander soweit verdreht, dass die Planetenachsen 21 des ersten Planetengetriebes genau zwischen den Planetenachsen 34 des zweiten Planetengetriebes liegen. Vorteilhafterweise werden in den beiden Planetengetrieben jeweils drei Planetenräder 19 und 33 gewählt. Daraus ergibt sich für das Polygon die geometrische Figur eines gleichschenkligen Dreiecks. Mit Blick auf die Zentralachse sind die aufgespannten Polygone der Planetenachsen zueinander ebenfalls um 60° gedreht.

Das in Fig. 1 dargestellte Getriebe zeigt eine Ausführung, in der für die Lager hauptsächlich Wälzlager vorgesehen sind. Die Maschinenelemente Wälzlager unterliegen aufgrund des berührenden Kontaktes zwischen den Wälzkörpern und den Laufflächen einer Verschleißbeanspruchung. Bei einer solchen Ausführung ist immer eine verbleibende Wahrscheinlichkeit eines Ausfalls solcher Lager gegeben. Um Forderungen nach einer extremen Ausfallsicherheit zu erfüllen, ist das Getriebe anstelle der Wälzlager vorzugsweise mit technisch äquivalenten Gleitlagern auszurüsten, ohne am Konzept der Leistungsverzweigung etwas ändern zu müssen. Der Vorteil dieser Maschinenelemente ist der berührungslose und damit verschleißfreie Betrieb.

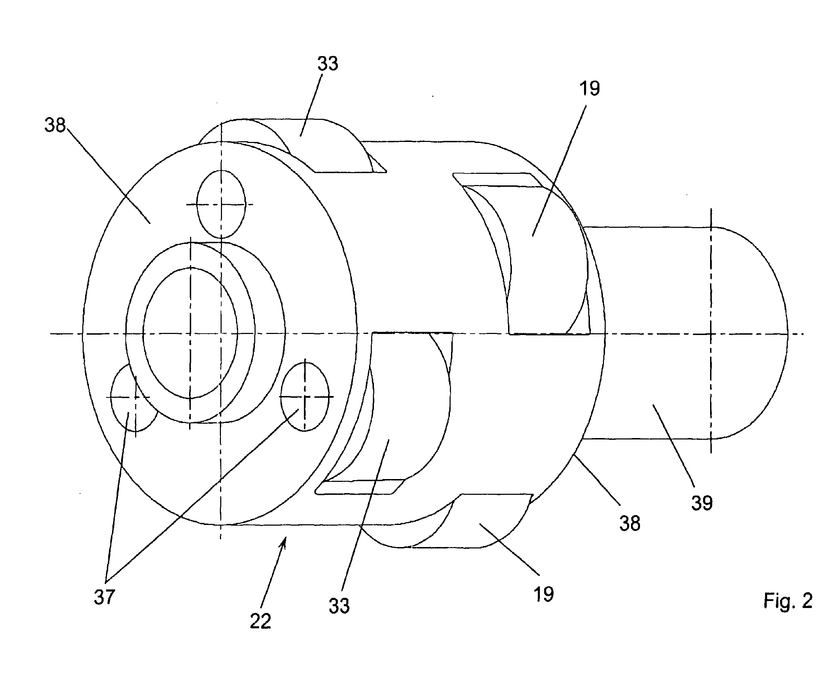

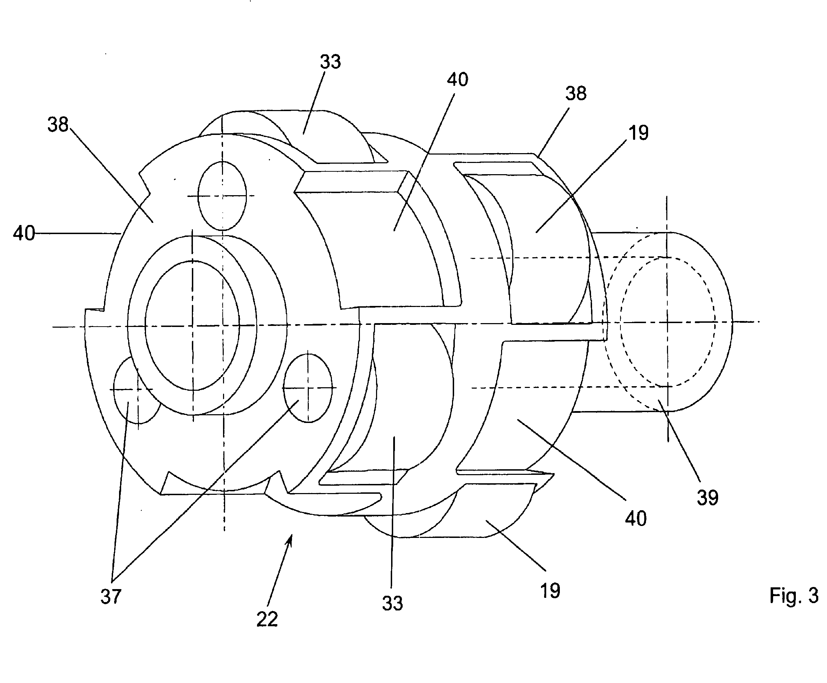

Der Planetenträger 22, in den Fig. 2 und 3 in perspektivischer Darstellung gezeigt, ist beiden Planetengetrieben gemeinsam. Der Planetenträger 22 ist einstückig und wird durch Gießen und anschließende spanende Bearbeitung hergestellt.

Mit dem Planetenträger 22 ist die Abtriebswelle 39 verbunden, die als Vollwelle (Fig. 2) oder als Hohlwelle (Fig. 3) vorzugsweise ausgebildet ist.

Von den beiden Stirnseiten 38 des gemeinsamen, einstückigen Planetenträgers 22 aus sind in den Planetenträger 22 einseitig geschlossene Bohrungen 37 (Sacklöcher) eingebracht. In diese Bohrungen 37 sind auf der einen Seite des Planetenträgers 22 die Planetenachsen 21 des ersten Planetengetriebes und auf der anderen Seite des Planetenträgers 22 die Planetenachsen 34 des zweiten Planetengetriebes eingesetzt.

Aufgrund der beschriebenen Anordnung und Gestaltung der die Planetenachsen 21, 34 aufnehmenden Bohrungen 37 und in Verbindung mit der versetzten Anordnung der Planetenräder 19, 33 in den beiden Planetengetrieben können die Planetenachsen 21, 34 eine geringe Länge aufweisen. Die Durchbiegung dieser kurzen Planetenachsen 21, 34 ist gering, so dass hohe Leistungen übertragen werden können. Im Unterschied dazu biegen sich die bekannten durchgehenden Planetenachsen anderer mehrstufiger Planetengetriebe unter der hier auftretenden Belastung unzulässig durch. Zudem lässt sich insbesondere aufgrund der Maßnahme der kurzen Planetenachsen ein im Außendurchmesser kleiner und kompakter Abtrieb über den Planetenträger 22 schaffen. Durch die Anordnung der Planetenstufen auf getrennten Planetenachsen innerhalb des gemeinsamen Planetenträgers können im Bedarfsfalle auch zwei unterschiedliche Planetenstufen mit unterschiedlichen Verzahnungsgrößen verwirklicht werden

Der in Fig. 3 dargestellte Planetenträger 22 ist eine Variante zu dem Planetenträger 22 gemäß der Fig. 2. Die Gestaltung des Planetenträgers 22 gemäß Fig. 3 berücksichtigt insbesondere die technischen Anforderungen des urformenden Fertigungsverfahrens, des Gießens. So sind in dem Bereich zwischen den Planetenachsen 21, 34 auf beiden Seiten des Planetenträgers 22 Randausnehmungen 40 vorgesehen. Diese Randausnehmungen 40 verringern bei gleichbleibenden Festigkeitseigenschaften das Gewicht des Planetenträgers 22 und vermindern gleichzeitig die Gefahr der Lunkerbildung in den Materialanhäufungen während der Erstarrung des Gussteiles. Die Ausbildung der Abtriebswelle 39 als Hohlwelle folgt ebenfalls diesen Empfehlungen einer fertigungsgerechten Konstruktion und erweitert zudem die Variantenvielfalt.

## Patentansprüche

1. Getriebe für den Antrieb eines Drehrohres mit einer Antriebswelle (3) und einer leistungsaufteilenden Getriebestufe, die als Stirnradgetriebe mit einer zwei Ritzel (8, 9) tragenden Zwischenwelle (7) ausgebildet ist und der eine leistungssummierende Getriebestufe mit einer Abtriebswelle (39) nachgeschaltet ist, wobei die Abtriebswelle (39) auf der Zentralachse des angetriebenen Drehrohres liegt, wobei die leistungssummierende Getriebestufe aus zwei parallelgeschalteten Planetengetrieben mit jeweils einem Sonnenrad (18, 32), auf Planetenachsen (21, 34) angeordneten Planetenrädern (19, 33), jeweils einem Hohlrad (24, 35) und mit einem gemeinsamen Planetenträger (22) besteht, der mit der Abtriebswelle (39) verbunden ist, wobei die Zwischenwelle (7) des Stirnradgetriebes schwimmend gelagert ist und wobei das Stirnradgetriebe und die Planetengetriebe ein symmetrisches Koppelgetriebe bilden, **dadurch gekennzeichnet, dass** die Planetenräder (19, 33) der beiden Planetengetriebe jeweils auf eigenen Planetenachsen (21, 34) angeordnet sind und dass die Planetenachsen (21, 34) in dem gemeinsamen und einstückig ausgebildeten Planetenträger (22). voneinander getrennt und versetzt zueinander angeordnet sind.

2. Getriebe nach Anspruch 1, **dadurch gekennzeichnet, dass** die Planetenachsen (21, 34) in einseitig geschlossenen Bohrungen (37) angeordnet sind, die von den Stirnseiten (38) in den Planetenträger (22) eingebracht sind.

3. Getriebe nach Anspruch 1 oder 2, **dadurch gekennzeichnet, dass** der Planetenträger (22) als ein Gussteil ausgebildet ist, das mit Randausnehmungen (40) in den Bereichen zwischen den Bohrungen (37) zur Aufnahme der Planetenachsen (21, 34) der Planetengetriebe versehen ist.

4. Getriebe nach einem der Ansprüche 1 bis 3, **dadurch gekennzeichnet, dass** die Sonnenräder (18, 32) der Planetengetriebe jeweils über eine doppelgelenkige Kupplungswelle (15, 30) mit jeweils einem Zweig des Stirnradgetriebes verbunden sind.

5. Getriebe nach Anspruch 4, **dadurch gekennzeichnet, dass** die eine Kupplungswelle (30) als Hohlwelle ausgebildet ist, die die andere Kupplungswelle (15) umgibt.

6. Getriebe nach Anspruch 4 oder 5, **dadurch gekennzeichnet, dass** die Kupplungswellen (15, 30) koaxial zueinander und zu der Abtriebswelle (39) auf der Zentralachse des angetriebenen Drehrohres angeordnet sind.

7. Getriebe nach einem der Ansprüche 3 bis 6, **dadurch gekennzeichnet, dass** an den Stirnseiten der Kupplungswellen (15, 30) axiale Gleitelemente (16, 31) angebracht sind.

8. Getriebe nach einem der Ansprüche 1 bis 7, **dadurch gekennzeichnet, dass** jedes Planetengetriebe genau drei Planetenräder (19, 33) aufweist, die als Polygon der Planetenachsen (21, 34) die geometrische Figur eines gleichschenkligen Dreiecks aufspannen, und dass der Winkel der Verdrehung zwischen den Planetenachsen (21, 34) der beiden Planetengetrieben 60° beträgt.

9. Getriebe nach einem der Ansprüche 1 bis 7, **dadurch gekennzeichnet, dass** die Zwischenwelle (7) in Loslagern (10) gelagert ist, die vorzugsweise als Toroidal-Rollenlager ausgebildet sind.

10. Getriebe nach einem der Ansprüche 1 bis 9, **dadurch gekennzeichnet, dass** die auf der Zwischenwelle (7) angeordneten Ritzel (8, 9) entgegengesetzt schräg verzahnt sind.

11. Getriebe nach einem der Ansprüche 1 bis 10, **dadurch gekennzeichnet, dass** die an jeweils gleicher Position in dem Stirnradgetriebe und den Planetengetrieben angeordneten Zahnräder und Ritzel mit den gleichen Verzahnungsgrößen ausgestattet sind und dass die Gesamtübersetzung des Getriebes über die Wahl der Zähnezahlen der genannten Zahnräder an die Prozessbedingungen in dem angetriebenen Drehrohr einstellbar sind.

12. Getriebe nach einem der Ansprüche 1 bis 11, **dadurch gekennzeichnet, dass** das Stirnradgetriebe einerseits und die Planetengetriebe andererseits in jeweils einem von zwei räumlich voneinander getrennten Gehäuseteilen (1, 2) eines gemeinsamen Gehäuses angeordnet sind.

13. Getriebe nach Anspruch 12, **dadurch gekennzeichnet, dass** in dem Gehäuseteil (1), in dem das Stirnradgetriebe als schnell laufende Stufe untergebracht ist, eine Druckumlaufschmierung vorgesehen ist und dass in dem Gehäuseteil (2), in dem die Planetengetriebe als langsamer laufende Stufe untergebracht sind, eine Tauchschmierung vorgesehen ist.

14. Getriebe nach Anspruch 13, **dadurch gekennzeichnet, dass** die Ölmenge in dem die Planetengetriebe aufnehmenden Gehäuseteil (2) über den Kreislauf der Druckumlaufschmierung in dem das Stirnradgetriebe aufnehmenden Gehäuseteil 1 regelbar ist.

15. Getriebe nach Anspruch 13 oder 14, **dadurch gekennzeichnet, dass** die beiden Gehäuseteile (1, 2) eine gemeinsame Wand aufweisen, die von der Kupplungswelle (15), der diese umgebenden hohlen Kupplungswelle (30) und der die hohle Kupplungswelle (30) aufnehmenden und einen ringförmigen Absatz (29) aufweisenden Welle (26) durchdrungen ist, und dass der ringförmige Absatz (29) die Abdichtung zwischen den beiden Gehäuseteilen (1, 2) bildet.

16. Getriebe nach einem der Ansprüche 1 bis 15, **dadurch gekennzeichnet, dass** die mit dem Planetenträger (22) verbundene Abtriebswelle (39) als Hohlwelle ausgebildet ist.

17. Getriebe nach einem der Ansprüche 1 bis 16, **dadurch gekennzeichnet, dass** die für Wellen (3, 7, 12, 26), Planetenachsen (21, 34) und Planetenträger (22) angeordneten Lager (4, 10, 13, 20, 23, 27, 36) als Wälzlager oder Gleitlager ausgebildet sind.

## Claims

1. Transmission for the drive of a rotary tube with a drive shaft (3) and a power-dividing gear stage, which is constructed as a spur wheel transmission with an intermediate shaft (7) carrying two pinions (8, 9) and which is connected downstream of a power-summating gear stage with a driven shaft (39), wherein the driven shaft (39) lies on the centre axis of the driven rotary tube, wherein the power-summating gear stage consists of two planetary gear trains, which are connected in parallel, each with a respective sun wheel (18, 32), planet wheels (19, 33) arranged on planet axles (21, 34), a respective ring gear (24, 35) and a common pinion cage (22), which is connected with the driven shaft (39), wherein the intermediate shaft (7) of the spur wheel transition is mounted to be floating and wherein the spur wheel transmission and the planetary gear train form a symmetrical coupler transmission, **characterised in that** the planet wheels (19, 33) of the two planetary gear trains are respectively arranged on own planet axles (21, 34) and that the planet axles (21, 34) are arranged separately from one another and offset relative to one another in the common and integrally constructed pinion cage (22).

2. Transmission according to claim 1, **characterised in that** the planet axles (21, 34) are arranged in doors (37) which are closed at one end and which are formed from the end faces (38) in the pinion cage (22).

3. Transmission according to claim 1 or 2, **characterised in that** the pinion cage (22) is constructed as a cast part, which is provided with edge recesses (40) in the regions between the bores (37) for reception of the planet axles (21, 34) of the planetary gear train.

4. Transmission according to one of claims 1 to 3, **characterised in that** the sun wheels (18, 32) of the planetary gear train are each connected by way of a double-jointed coupling shaft (15, 30) with a respective branch of the spur wheel transmission.

5. Transmission according to claim 4, **characterised in that** one coupling shaft (30) is constructed as a hollow shaft which surrounds the other coupling shaft (15).

6. Transmission according to claim 4 or 5, **characterised in that** the coupling shafts (15, 30) are arranged coaxial with respect to one another and with respect to the driven shaft (39) on the centre axis of the driven rotary tube.

7. Transmission according to one of claims 3 to 6, **characterised in that** axial slide elements (16, 31) are mounted at the end faces of the coupling shafts (15, 30).

8. Transmission according to one of claims 1 to 7, **characterised in that** each planetary gear transmission has exactly three planet wheels (19, 33), which as a polygon of the planet axles (21, 34) span the geometric figure of an equilateral triangle, and that the angle of rotation between the planet axles (21, 34) of the two planetary gear trains is 60°.

9. Transmission according to one of claims 1 to 7, **characterised in that** the intermediate shaft (7) is mounted in movable bearings (10), which are preferably constructed as toroidal roller bearings.

10. Transmission according to one of claims 1 to 9, **characterised in that** the pinions (8, 9) arranged on the intermediate shaft (7) have oppositely inclined toothing.

11. Transmission according to one of claims 1 to 10, **characterised in that** the gearwheels and pinions arranged at the respectively same position in the spur wheel transmission and the planetary gear trains are equipped with the same number of teeth and that the overall translation ratio of the transmission is settable by way of selection of the numbers of teeth of the said gearwheels to the process conditions in the driven rotary tube.

12. Transmission according to one of claims 1 to 11, **characterised in that** the spur wheel transmissions on the one hand and the planetary gear trains on the other hand are each arranged in a respective one of two housing parts (1, 2), which are spatially separate from one another, of a common housing.

13. Transmission according to claim 12, **characterised in that** a circulatory pressure lubrication is provided in the housing part (1) in which the spur wheel transmission is accommodated as high-speed stage and that a dip lubrication is provided in the housing part (2) in which the planetary gear trains are accommodated as slower-speed stage.

14. Transmission according to claim 13, **characterised in that** the oil quantity in the housing part (2) receiving the planetary gear trains can be regulated by way of the circuit of the circulatory pressure lubrication in the housing part (1) receiving the spur wheel transmission.

15. Transmission according to claim 13 or 14, **characterised in that** the two housing parts (1, 2) have a common wall, which is penetrated by the coupling shaft (15), the hollow coupling shaft (30) surrounding this and the shaft (26) receiving the hollow coupling shaft (30) and having an annular offset (29) and that the annular offset (29) forms the seal between the two housing parts (1, 2).

16. Transmission according to one of claims 1 to 15, **characterised in that** the driven shaft (39) connected with the pinion cage (22) is constructed as a hollow shaft.

17. Transmission according to one of claims 1 to 16, **characterised in that** the bearings (4, 10, 13, 20, 23, 27, 36) arranged for shafts (3, 7, 12, 26), planet axles (21, 34) and pinion cage (22) are constructed as roller bearings or slide bearings.

## Revendications

1. Transmission pour l'entraînement d'un tube rotatif comprenant un arbre moteur (3) et un étage de transmission répartiteur de puissance, qui est réalisé sous forme d'engrenage cylindrique avec un arbre intermédiaire (7) supportant deux pignons (8, 9), et en aval duquel est monté un étage de transmission totalisateur de puissance avec un arbre de sortie (39), transmission dans laquelle l'arbre de sortie (39) se situe sur l'axe central du tube rotatif entraîné, l'étage totalisateur de puissance est constitué de deux planétaires montés en parallèle avec chacun une roue solaire (18, 32), des roues satellites (19, 33) disposées sur des axes de planétaire (21, 34), une roue à denture intérieure (24, 35) et un porte-satellites commun (22), qui est assemblé avec l'arbre de sortie (39), l'arbre intermédiaire (7) de l'engrenage cylindrique étant monté flottant et l'engrenage cylindrique et les planétaires formant un engrenage couplé symétrique, **caractérisée en ce que** les roues satellites (19, 33) des deux planétaires sont disposées chacune sur des axes (21, 34) propres et que les axes de planétaire (21, 34) sont séparés l'un de l'autre et disposés en déport mutuel dans le porte-satellites (22) commun et de réalisation monobloc.

2. Transmission suivant la revendication 1, **caractérisée en ce que** les axes de planétaire (21, 34) sont disposés dans des alésages (37) fermés unilatéralement, qui sont pratiqués à partir de côtés frontaux (38) dans le porte-satellites (22).

3. Transmission suivant l'une des revendications 1 et 2, **caractérisée en ce que** le porte-satellites (22) est réalisé sous forme de pièce moulée, qui est munie de creux de bordure (40) dans les zones entre les alésages (37) destinés à recevoir les axes (21, 34) des planétaires.

4. Transmission suivant l'une des revendications 1 à 3, **caractérisée en ce que** les roues solaires (18, 32) des planétaires sont respectivement assemblées par l'intermédiaire d'un arbre d'accouplement (15, 30) à double articulation avec respectivement une branche de l'engrenage cylindrique.

5. Transmission suivant la revendication 4, **caractérisée en ce que** l'un des arbres d'accouplement (30) est réalisé sous forme d'arbre creux, qui entoure l'autre arbre d'accouplement (15).

6. Transmission suivant l'une des revendications 4 et 5, **caractérisée en ce que** les arbres d'accouplement (15, 30) sont disposés coaxialement entre eux et par rapport à l'arbre de sortie (39) sur l'axe central du tube rotatif entraîné.

7. Transmission suivant l'une des revendications 3 à 6, **caractérisée en ce que** des coulisses axiales (16, 31) sont montées sur les côtés frontaux des arbres d'accouplement (15, 30).

8. Transmission suivant l'une des revendications 1 à 7, **caractérisée en ce que** chaque planétaire présente exactement trois roues satellites (19, 33), qui fixent sous forme de polygone des axes de planétaire (21, 34) la figure géométrique d'un triangle isocèle, et que l'angle de torsion entre les axes (21, 34) des deux planétaires est de 60°.

9. Transmission suivant l'une des revendications 1 à 7, **caractérisée en ce que** l'arbre intermédiaire (7) est monté dans des paliers libres (10), qui sont réalisés de préférence sous forme de paliers à rouleaux toroïdaux.

10. Transmission suivant l'une des revendications 1 à 9, **caractérisée en ce que** les pignons (8, 9), disposés sur l'arbre intermédiaire (7), sont à denture hélicoïdale de sens contraire.

11. Transmission suivant l'une des revendications 1 à 10, **caractérisée en ce que** les roues dentées et pignons, disposés en position respectivement égale dans l'engrenage cylindrique et dans les planétaires, sont équipés de dimensions de dentures égales, et que le rapport d'engrenage total de la transmission est réglable par le choix des nombres de dents des roues dentées citées sur les conditions de processus dans le tube rotatif entraîné.

12. Transmission suivant l'une des revendications 1 à 11, **caractérisée en ce que** l'engrenage cylindrique, d'un côté, et les planétaires, de l'autre côté, sont disposés dans l'une de deux parties de carter (1, 2), séparées spatialement l'une de l'autre, d'un carter commun.

13. Transmission suivant la revendication 12, **caractérisée en ce qu'**une lubrification par circulation forcée est prévue dans la partie de carter (1), dans laquelle est logée l'engrenage cylindrique en tant qu'étage à rotation rapide, et qu'un graissage par barbotage est prévu dans la partie de carter (2), dans laquelle sont logés les planétaires en tant qu'étage à rotation plus lente.

14. Transmission suivant la revendication 13, **caractérisée en ce que** la quantité d'huile dans la partie de carter (2), recevant les planétaires, est réglable par l'intermédiaire du circuit de lubrification par circulation forcée dans la partie de carter (1), recevant l'engrenage cylindrique.

15. Transmission suivant l'une des revendications 13 et 14, **caractérisée en ce que** les deux parties de carter (1, 2) présentent une paroi commune, que traversent l'arbre d'accouplement (15), l'arbre d'accouplement creux (30) entourant ce dernier, et l'arbre (26) qui reçoit l'arbre d'accouplement creux (30) et présente un épaulement annulaire (29), et que l'épaulement annulaire (29) forme l'étanchéité entre les deux parties de carter (1, 2).

16. Transmission suivant l'une des revendications 1 à 15, **caractérisée en ce que** l'arbre de sortie (39), assemblé avec le porte-satellites (22), est réalisé sous forme d'arbre creux.

17. Transmission suivant l'une des revendications 1 à 16, **caractérisée en ce que** des paliers (4, 10, 13, 20, 23, 27, 36), disposés pour des arbres (3, 7, 12, 26), des axes de planétaire (21, 34) et le porte-satellites (22), sont réalisés sous forme de roulements ou de paliers lisses.
